# EUROPÄISCHE PATENTSCHRIFT

(11) **EP 3 935 454 B1**
(45) Veröffentlichungstag und Bekanntmachung des Hinweises auf die Patenterteilung: **06.08.2025**
(21) Anmeldenummer: 20710126.2
(22) Anmeldetag: 06.03.2020
(51) Int. Cl.: G05B 19/05, G05B 19/042

(54) **VERFAHREN ZUM ÜBERPRÜFEN DER HARDWAREKONFIGURATION EINES REAL AUFGEBAUTEN STEUERUNGSSYSTEMS**
METHOD FOR CHECKING THE HARDWARE CONFIGURATION OF A REAL CONTROL SYSTEM
PROCÉDÉ DESTINÉ À CONTRÔLER LA CONFIGURATION MATÉRIELLE D'UN SYSTÈME DE COMMANDE RÉELLEMENT CONSTRUIT

(30) Priorität: 06.03.2019 DE 102019105688
(43) Veröffentlichungstag der Anmeldung: 12.01.2022
(73) Patentinhaber: PHOENIX CONTACT GMBH & CO. KG, 32825 Blomberg (DE)
(72) Erfinder: HUDETZ, Hans-Peter, 31789 Hameln (DE); SCHAPER, Elmar, 32676 Lügde (DE)
(74) Vertreter: Blumbach · Zinngrebe Patentanwälte PartG mbB
(86) Internationale Anmeldenummer: PCT/EP2020/056040
(87) Internationale Veröffentlichungsnummer: WO 2020/178433

(56) Entgegenhaltungen:
- DE-A1- 102017 103 553
- JP-A- 2010 079 926
- US-A- 5 978 593

## Beschreibung

Die Erfindung betrifft ein Verfahren zum Überprüfen der Hardwarekonfiguration eines real aufgebauten Steuerungssystems, welches insbesondere in der industriellen oder gebäudetechnischen Automatisierungstechnik angewendet werden kann.

Es sind Steuer- und/oder Datenübertragungssysteme bekannt, die modular aufgebaut sind und neben einem Steuerungs- und/oder Auswertemodul mehrere E/A-Module aufweisen, die im montierten Zustand mechanisch miteinander verbunden sind und eine lösbare Einheit bilden. Ein derartiges Steuer- und/oder Datenübertragungssystem ist beispielsweise aus der DE 10 2007 006 830 A1 oder der DE 10 2015 111 370 A1 bekannt.

Derzeit ist es technisch nicht möglich, aufgrund der physikalisch gleichen Anschlussgeometrie der Anschlusseinrichtungen bzw. Anschlussklemmen des Steuerungs- und/oder Auswertemoduls festzustellen, welche Anschlusseinrichtung bzw. Anschlussklemme des Steuerungs- und/oder Auswertemoduls an welchem E/A-Modul angeschlossen wurde. Bei einer Fehlbestückung kann dies beim Anwender zu Fehlfunktionen führen.

Aus der 10 2017 103 553 A1 ist ein Verfahren zum Erstellen eines digitalen Verdrahtungsprotokolls für ein Automatisierungssystem bekannt, welches mehrere E/A-Module aufweist, die über ein Übertragungsmedium mit einer Steuerungseinrichtung verbunden sind. Das bekannte Verfahren zeichnet sich dadurch aus, dass
a) unter Verwendung einer vorbestimmten Verdrahtungsliste vorbestimmten Klemmstellen der im Automatisierungssystem enthalten E/A-Module jeweils ein Informationsträger zugeordnet wird, der als Konfigurations- und/oder Parametrisierungsinformation eine erste Information, die das jeweilige E/A-Modul identifiziert, und/oder eine zweite Information, die eine vorbestimmte Klemmstelle des jeweiligen E/A-Moduls als Start- oder Zielklemmstelle einer Verdrahtung kennzeichnet und/oder eine dritte Information enthält, die eine vorbestimmte Klemmstelle eines anderen E/A-Moduls als Ziegel- bzw. Staatklemmstelle der jeweiligen Verdrahtung kennzeichnet, dass
b) mittels einer mobilen und tragbaren Leseeinrichtung die Konfigurations- und/oder Parametrisierungsinformationen aus den Informationsträgern, welche in Schritt (a) den vorbestimmten Klemmstellen zugeordnet worden sind, ausgelesen werden, und dass
c) in der Leseeinrichtung oder in einer separaten Rechnereinrichtung aus den eingelesen Konfigurations- und/oder Parametrisierungsinformation ein digitales Verdrahtungsprotokoll zur weiteren Verwendung erstellt wird.

Der Erfindung liegt nunmehr die Aufgabe zugrunde, ein Verfahren zum Überprüfen der Hardwarekonfiguration eines real aufgebauten Steuerungssystems, welches ein Steuerungsmodul und mehrere mit dem Steuerungsmodul mechanisch lösbar verbundene E/A-Module aufweist, zur Verfügung zu stellen, welches einem Nutzer ermöglicht, die Hardwarekonfiguration eines real aufgebauten Steuerungssystems einfach, schnell und zuverlässig überprüfen zu können.

Ein Kerngedanke der Erfindung kann darin gesehen werden, mithilfe einer mobilen Einrichtung, die eine Kamera, insbesondere eine digitale Kamera enthält, ein digitales Bild eines real aufgebautes Steuerungssystem aufzunehmen und das aufgenommene Bild mit einer in der mobilen Einrichtung hinterlegten digitalen Repräsentation einer gewünschten Hardwarekonfiguration des Steuerungssystems unter Auswertung optischer Markierungen, die an vorbestimmten Stellen des real aufgebauten Steuerungssystems zu vergleichen.

Das oben genannte technische Problem wird durch die Verfahrensschritte des Anspruchs 1 gelöst.

Demnach wird ein Verfahren zum Überprüfen der Hardwarekonfiguration eines real aufgebauten Steuerungssystems mithilfe einer mobilen Einrichtung zur Verfügung gestellt, die eine Kamera und eine Speichereinrichtung enthält, in welcher eine digitale Repräsentation einer gewünschten Hardwarekonfiguration des real aufgebauten Steuerungssystems gespeichert ist, wobei das real aufgebaute Steuerungssystem ein Steuerungsmodul mit mehreren Anschlusseinrichtungen aufweist, wobei an jeder Anschlusseinrichtung ein E/A-Modul derart angeschlossen ist, dass das Steuerungsmodul mit den E/A-Modulen mechanisch lösbar gekoppelt ist, wobei an dem Steuerungsmodul eine optische Markierung zur eindeutigen Identifizierung des Steuerungsmoduls und an jedem der E/A-Module wenigstens eine optische Markierung zur eindeutigen Identifizierung des jeweiligen E/A-Moduls angebracht sind, mit folgenden Schritten:
a) Aufnehmen, mit der Kamera der mobilen Einrichtung, eines digitalen Bildes des real aufgebauten Steuerungssystems; und
b) Überprüfen der Hardwarekonfiguration des real aufgebauten Steuerungssystems in der mobilen Einrichtung, indem die in der mobilen Einrichtung gespeicherte digitale Repräsentation mit dem in Schritt a) aufgenommenen digitalen Bild unter Berücksichtigung der optischen Markierungen verglichen wird.

Bei der mobilen Einrichtung handelt es sich vorzugsweise um ein sogenanntes Handheld, das ist insbesondere eine tragbare Kommunikationseinrichtung, wie z. B. ein Mobilfunkgerät, Smartphone ein PDA oder dergleichen. Zweckmäßigerweise codiert jede der optischen Markierungen eine individuelle Identifizierungsinformation, mit denen das Steuerungsmodul und jedes der E/A-Module eindeutig identifiziert werden kann.

Die E/A-Module können beispielsweise Relais oder Optokoppler mit Anschlüssen zur digitalen oder auch analogen Signalverarbeitung enthalten oder auch lediglich einfache Durchgangsmodule zur Durchleitung von eingangs-oder Ausgangssignalen bereitstellen. Die E/A-Module können als PLC-Reihenklemmen (PLC steht für Programmable Logic Controller) ausgebildet sein.

Dank der mechanisch lösbaren Kopplung zwischen dem Steuerungsmodul und den E/A-Modulen ist sichergestellt, dass die optischen Markierungen im montierten Zustand des Steuerungssystems im Wesentlichen unveränderliche Positionen relativ zueinander einnehmen. Auf diese Weise entsteht ein starres Muster hinsichtlich der optischen Markierungen, die die Hardwarekonstruktion des real aufgebauten Steuerungssystems abbilden.

Diese Maßnahmen ermöglichen einem Nutzer, in einfacher und schneller Weise zu überprüfen, ob das real aufgebaute Steuerungssystem ordnungsgemäß aufgebaut, d. h. insbesondere fehlerfrei bestückt worden ist.

Vorteilhafte Weiterbildungen sind Gegenstand der Unteransprüche.

Um die Qualität und Zuverlässigkeit der in Schritt b) ausgeführten Überprüfung zu erhöhen, sind die optischen Markierungen an vorbestimmten Stellen des Steuerungsmoduls und der E/A-Module angebracht, wobei Schritt a) folgende weitere Schritte umfasst:
Extrahieren der im aufgenommenen digitalen Bild enthaltenen optischen Markierungen und Anordnen der extrahierten optischen Markierungen jeweils in einem Feld einer ersten 2-dimensionalen Matrix, wobei die
in der mobilen Einrichtung gespeicherte digitale Repräsentation der gewünschten Hardwarekonfiguration des Steuerungssystems eine zweite 2-dimensionale Matrix enthält, wobei in vorbestimmten Feldern der zweiten Matrix jeweils eine eindeutige Kennung zur Identifizierung des Steuerungsmoduls und der E/A-Module enthalten ist, und wobei
in Schritt b) die Inhalte der korrespondierenden Felder der ersten und zweiten Matrix miteinander verglichen werden.

Gemäß einer vorteilhaften Weiterbildung kann die mobile Einrichtung unter Ansprechen auf den in Schritt b) durchgeführten Vergleich eine fehlerhafte Hardwarekonfiguration im real aufgebauten Steuerungssystem erkennen und den Ort innerhalb der fehlerhaften Hardwarekonfiguration feststellen.

Um die Qualität des Vergleichsergebnisses weiterhin verbessern zu können, ist vorgesehen, dass an dem Steuerungsmodul und/oder an wenigstens einem der E/A-Modulen des real aufgebauten Steuerungssystems wenigstens zwei im Abstand zueinander angeordnete Referenzmarkierungen angebracht sind, die in Schritt a) zur Bildpositionierung ausgewertet.

Vorzugsweise handelt es sich bei den optischen Markierungen um Barcodes und/oder QR-Codes.

Zweckmäßigerweise können die QR-Codes und/oder Barcodes wenigstens zwei Referenzmarkierungen enthalten, die in Schritt a) zur Bildpositionierung ausgewertet werden können.

Gemäß einer vorteilhaften Weiterbildung ist in der mobilen Einrichtung eine digitale Repräsentation einer gewünschten Hardwarekonfiguration des real aufgebauten Steuerungssystems gespeichert wird, bei welchem an wenigstens einem der E/A-Module eine Anschlussleitung angeschlossen ist, und dass
in Schritt a) ein digitales Bild des real aufgebauten Steuerungssystems aufgenommen wird, bei welchem an wenigstens einem der E/A-Module eine Anschlussleitung angeschlossen ist, wobei an jeder Anschlussleitung eine optische Markierung zur eindeutigen Identifizierung der jeweiligen Anschlussleitung angebracht ist.

Um elektronische Beschädigungen oder Fehlfunktionen des Steuerungssystems durch eine fehlerhafte Bestückung des Steuerungsmoduls zu vermeiden, wird das Steuerungsmodul nicht scharf geschaltet, wenn in Schritt b) des Anspruchs 1 festgestellt worden ist, dass die Hardwarekonfiguration des real aufgebauten Steuerungssystems fehlerhaft ist.

Das oben genannte technische Problem wird ebenfalls durch ein Computerprogramm überprüft. Das Computerprogramm enthält eine Vielzahl von Anweisungen, welche in einer mobilen Einrichtung, die eine Kamera enthält, speicherbar sind, wobei die Anweisungen, wenn sie von einer Steuereinheit der mobilen Einrichtung abgearbeitet werden, das Verfahren nach einem der Ansprüche 1 bis 8 ausführen. Das Computerprogramm kann eine App sein.

Die Erfindung wird nachfolgend anhand eines Ausführungsbeispiels in Verbindung mit den beiliegenden Zeichnungen näher erläutert. Es zeigen:
- Figur 1: ein beispielhaftes Steuerungssystem, welches ein Steuerungsmodul und mehrere E/A-Module aufweist,
- Figur 2: eine Draufsicht auf das in Figur 1 gezeigte beispielhafte Steuerungssystem, wobei an jedes der in Figur 1 gezeigten E/A-Module jeweils eine aus einem Kabel herausgeführte Leitung angeschlossen ist, und
- Figur 3: eine beispielhafte 2-dimensionale digitale Matrix, in die die in Fig. 2 gezeigten optischen Markierungen eingefügt sind.

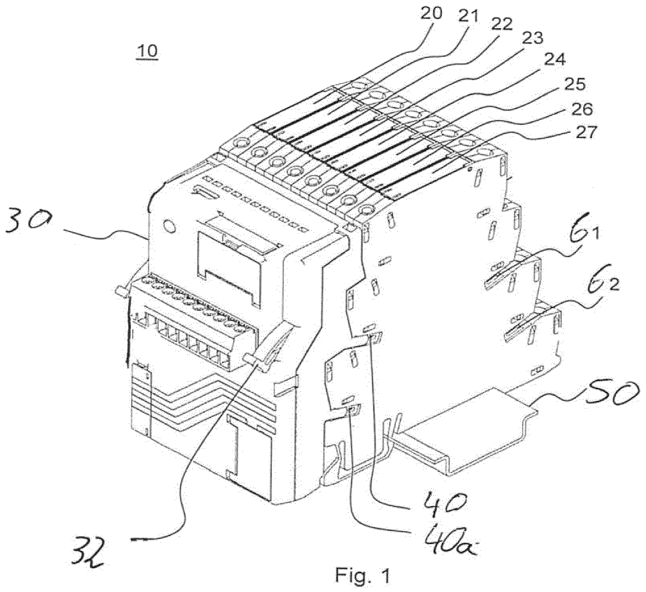

Figur 1 zeigt ein beispielhaftes Steuerungssystem 10, welches beispielsweise auf einer Tragschiene 50, die in einem Schaltschrank angeordnet sein kann, aufgerastet werden kann. Das beispielhafte Steuerungssystem 10 kann vorzugsweise in der industriellen oder gerätetechnischen Automatisierungstechnik eingesetzt werden und somit Bestandteil einer Automatisierungsanlage sein. Ein solches Steuerungssystem 10 ist beispielsweise aus der DE 10 2007 006 830 A1 bekannt.

Das Steuerungssystem 10 weist mehrere E/A-Module auf, die beispielsweise jeweils als Reihenklemme ausgebildet sein können und auf der Tragschiene 50 aufgerastet werden können. Im vorliegenden Beispiel sind acht E/A-Module 20 bis 27 dargestellt. Wie in Figur 1 gezeigt, sind die acht E/A-Module 20 bis 27 benachbart zueinander auf der Tragschiene 50 angeordnet. Ferner weist das beispielhafte Steuerungssystem 10 ein Steuerungsmodul 30 auf, welches zum Beispiel eine Kleinsteuerung oder eine speicherprogrammierbare Steuerung (SPS, im Englischen als PLC bekannt) sein kann. Die E/A-Module 20-27 können beispielsweise als Leerklemmen, Relais oder Optokoppler mit Anschlüssen zur digitalen oder auch analogen Signalverarbeitung oder auch lediglich als einfache Durchgangsmodule zur Durchleitung eines Signals ausgebildet sein.

Das Steuerungsmodul 30 ist dazu ausgebildet, elektrisch und mechanisch mit einer vorbestimmten Anzahl von E/A-Modulen lösbar verbunden werden zu können. Das beispielhaft dargestellte Steuerungsmodul 30 ist dazu ausgebildet, mit den acht E/A-Modulen 20 bis 27 verbunden werden zu können.

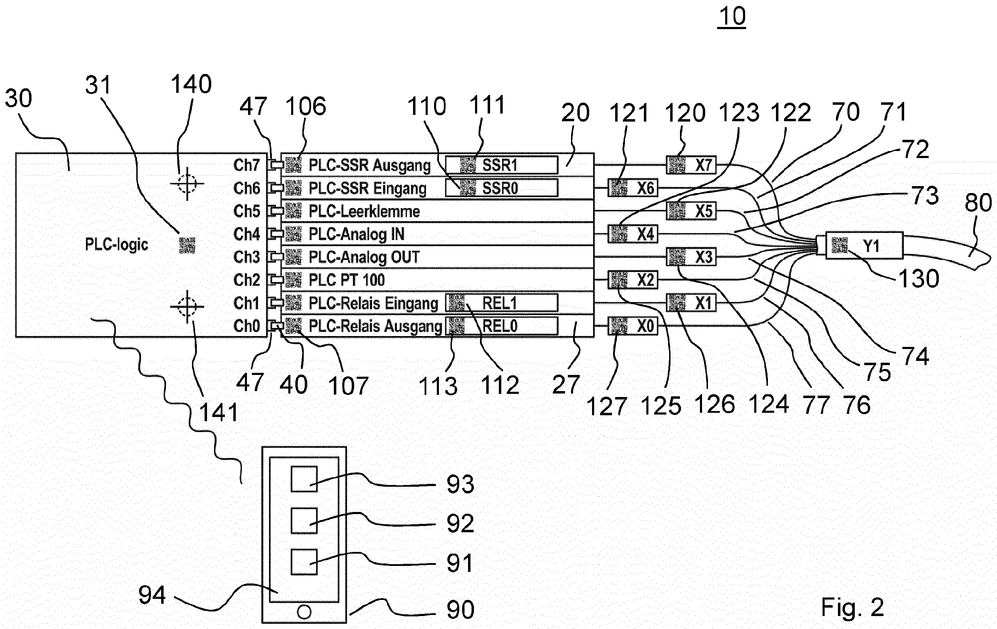

In Figur 1 sind mit Bezugszeichen 40 und 40a Anschlüsse des Steuerungsmoduls 30 dargestellt, die als Steckkontakte ausgebildet sein können, die in entsprechende Buchsenkontakte der jeweiligen E/A-Module 20 bis 27 eingeführt werden können. Figur 1 zeigt den montierten Zustand des Steuerungssystems 10, bei dem die E/A-Module 20 bis 27 mechanisch und elektrisch lösbar mit dem Steuerungsmodul 30 verbunden sind. Um das Steuerungsmodul 30 von den E/A-Modulen 20 bis 27 wieder trennen zu können, kann eine Auswurfeinrichtung 32 vorgesehen sein. An die E/A-Module 20 bis 27 können in an sich bekannter Weise Feldgeräte, wie zum Beispiel Aktoren oder Sensoren über elektrische Leitungen angeschlossen werden. In Figur 1 sind beispielhaft elektrische Anschlüsse 61 und 62 des E/A-Moduls 27 dargestellt, an welche zum Beispiel ein Feldgerät über eine elektrische Leitung 77, wie in Fig. 2 gezeigt, angeschlossen werden kann.

Es ist üblich, dass vor der Bestückung und Inbetriebnahme der Steuerungseinrichtung 10 die digitalen Ein- und Ausgänge und die analogen Ein- und Ausgänge des Steuerungsmoduls 30 vorab über ein Softwaretool in an sich bekannter Weise programmiert werden können. Das Programm, welches die Anschlussbelegung des Steuerungsmoduls 30 definiert, wird dann in herkömmlicher Weise, beispielsweise über eine USB-Verbindung, in das Steuerungsmodul 30 geladen. Die tatsächliche Bestückung, d.h. das Anschließen der richtigen E/A-Module an die korrekten Anschlüsse des Steuermoduls 30 und die anschließende Inbetriebnahme erfolgt dann beispielsweise vor Ort, zum Beispiel in einem Schaltschrank.

Die Anschlüsse des Steuerungsmoduls 30 sind beispielsweise wie folgt spezifiziert bzw. programmiert worden: Der einem internen Kanal CH7 zugeordnete Anschluss ist als digitaler Ausgang und der einem internen Kanal CH6 zugeordnete Anschluss als digitaler Eingang des Steuerungsmoduls 30 programmiert, an die das E/A-Modul 20 bzw. 21 angeschlossen werden sollen, die jeweils ein Halbleiterrelais enthalten. Der einem internen Kanal CH5 zugeordnete Anschluss des Steuerungsmoduls 30 wird nicht benötigt. Gemäß der beispielhaften Programmierung kann deshalb an diesen Anschluss das E/A-Modul 22 korrekterweise angeschlossen werden, welches eine Leerklemme darstellt. Die den internen Kanälen CH4 und CH3 zugeordneten Anschlüsse des Steuerungsmoduls 30 sind als analoger Eingang bzw. analoger Ausgang spezifiziert, an die das E/A-Modul 23 bzw. 24 angeschlossen werden können. Der einem internen Kanal CH2 zugeordnete Anschluss des Steuerungsmoduls 30 kann beispielsweise als analoger Anschluss programmiert worden sein, an den das E/A-Modul 25, welches beispielsweise einen Temperatursensor PT 100 enthält, angeschlossen werden soll. Die den internen Kanälen CH1 und CH0 zugeordneten Anschlüsse des Steuerungsmoduls 30 sind als analoger Eingang bzw. analoger Ausgang für Relais programmiert worden, an die das E/A-Modul 26 bzw. das E/A-Modul 27 angeschlossen werden sollen, die jeweils ein elektromagnetisches Relais enthalten. Figur 2 zeigt eine entsprechend der Programmierung vorgenommene korrekte Hardwarekonfiguration, d.h. Bestückung des Steuerungssystems 10.

Wie aus Figur 2 ferner zu entnehmen, ist an den Anschlüssen der E/A-Module 20 bis 27 jeweils eine Leitung angeschlossen. Die einzelnen Leitungen sind mit Bezugszeichen 70 bis 77 versehen und beispielhaft in einem Kabel 80 zusammengefasst. Über das Kabel 80 können beispielsweise Feldgeräte, wie zum Beispiel Sensoren und Aktoren an die E/A-Module 20 bis 27 angeschlossen werden.

Um in zuverlässiger und einfacher Art und Weise feststellen zu können, ob das Steuerungsmodul 30 entsprechend seiner Programmierung korrekt bestückt worden ist, d.h. die E/A-Module 20 bis 27 auch mit den entsprechend programmierten Anschlüssen des Steuerungsmoduls 30 verbunden worden sind, sind optische Markierungen an dem Steuerungsmodul 30, den E/A-Modulen 20 bis 27, und sofern vorhanden, an den Leitungen 70 bis 77 und dem Kabelende des Kabels 80 angebracht, die eine eindeutige Identifizierung des Steuerungsmoduls 30, jedes der E/A-Module 20 bis 27, jeder der Leitungen 70 bis 77 und des Kabels 80 ermöglichen. Die optischen Markierungen werden derart angebracht, dass sie für die mobile Einrichtung 90 leicht zugänglich und somit in einfacher Weise mit einer Kamera 91 der mobilen Einrichtung 90 aufgenommen werden können.

Bei der mobilen Einrichtung 90 handelt es sich vorzugsweise um ein tragbares Kommunikationsgerät, dass zum Beispiel ein Smartphone, ein PDA oder ähnliches sein kann. Die mobile Einrichtung 90 weist beispielsweise die Kamera 91, welche insbesondere eine digitale Kamera sein kann, eine Speichereinrichtung 92, ein Display 94 und eine Steuereinheit 93, die als Mikrocontroller ausgebildet sein kann, auf. Die Steuereinheit 93 dient vornehmlich dazu, die Funktionen der mobilen Einrichtung 90 zu steuern und zu überwachen. In der Speichereinrichtung 92 oder einer separaten Speichereinrichtung der mobilen Einrichtung 90 kann ein Bildverarbeitungs- und/oder Bildanalysealgorithmus abgespeichert sein. Die Steuereinheit 93 ist beispielsweise dazu ausgebildet, unter Ausführung des Bildverarbeitungs- und/oder Bildanalysealgorithmus mittels der Kamera 91 aufgenommene optische Markierungen in Felder einer virtuellen 2-dimensinalen Matrix zu projizieren und zu interpretieren bzw. auszuwerten.

Die optischen Markierungen sind vorzugsweise jeweils an der Oberseite des Steuerungsmoduls 30, der E/A-Module 20 bis 27 der Leitungen 70 bis 77 und des Kabelendes des Kabels 80 angebracht. Die optischen Markierungen können zum Beispiel als Barcode oder QR-Code ausgebildet sein, die jeweils eine individuelle Identifizierungsinformation codieren. Bei dem beispielhaften Steuerungssystem 10 sind die optischen Markierungen jeweils als QR-Code realisiert. In jedem Fall sind die optischen Markierungen derart an dem Steuerungssystems 10 angeordnet, dass sie mit einer einzigen Aufnahme mittels der Kamera 91 der mobilen Einrichtung 90 aufgenommen werden können.

Wie in Figur 2 zu sehen, ist auf der Oberseite des Steuerungsmoduls 30 eine optische Markierung 31 angeordnet, die eine Identifizierungsinformation zur eindeutigen Identifizierung des Steuermoduls 30 codiert. In ähnlicher Weise kann auf der Oberseite jedes der E/A-Module 20 bis 27 eine optische Markierung angeordnet sein, die eine Identifizierungsinformation zur eindeutigen Identifizierung des jeweiligen E/A-Moduls codiert. Die optischen Markierungen, die an den E/A-Modulen 20 bis 27 angeordnet sind, tragen der Reihe nach die Bezugszeichen 100 bis 107. Zweckmäßigerweise liegen die optischen Markierungen 100 bis 107 auf einer ersten gedachten Linie, die parallel zur Y-Achse des in Figur 2 eingezeichneten Koordinatensystems und somit senkrecht zur Längsachse des Steuerungssystems 10, die parallel zur x-Achse verläuft, liegt. Zusätzlich können an jedem der E/A-Module 20 bis 27 jeweils eine weitere optische Markierung angebracht sein, die zum Beispiel die technische Realisierung und Funktion des jeweiligen E/A-Moduls eindeutig identifiziert. So weisen die E/A-Module 20 und 21 jeweils eine weitere Markierung 110 bzw. 111 auf, die das jeweilige E/A-Modul als Halbleiterrelais eindeutig identifizieren. In ähnlicher Weise tragen die E/A-Module 26 und 27 jeweils eine zweite optische Markierung 112 bzw. 113, die das jeweilige E/A-Modul 26 bzw. 27 als elektromagnetisches Relais eindeutig identifizieren. Die zweiten optischen Markierungen 110 bis 113 liegen auf einer zweiten gedachten Linie, die parallel zur Y-Achse des in Figur 2 gezeigten Koordinatensystems verläuft, aber gegenüber der ersten gedachten Linie nach rechts versetzt ist.

Darüber hinaus kann an der Leitung 71 eine optischen Markierung 121, an der Leitung 73 eine optische Markierung 123, an der Leitung 75 eine optische Markierung 125 und an der Leitung 77 eine optische Markierung 127 angebracht sein. Um die Auflösung hinsichtlich der optischen Markierungen 120 bis 127 zu vergrößern, können die optischen Markierungen 121, 123, 125 und 127 beispielsweise entlang einer dritten gedachten Linie an den Leitungen 71, 73, 75 und 77 angeordnet sein, wobei die dritte gedachte Linie parallel zur Y-Achse des in Figur 2 gezeigten Koordinatensystems verläuft, aber gegenüber der zweiten gedachten Linie nach rechts versetzt ist. In ähnlicher Weise kann die Leitung 70 eine optische Markierung 120, die Leitung 72 eine optische Markierung 122, die Leitung 74 eine optische Markierung 124 und die Leitung 76 eine optische Markierung 126 tragen. Die Markierungen 120, 122, 124 und 126 können auf einer vierten gedachten Linie angeordnet sein, die parallel zur Y-Achse verläuft, aber gegenüber der dritten gedachten Linie nach rechts versetzt ist. Am Kabelende des Kabels 80 kann eine optische Markierung 130 angebracht sein, die bezüglich der X-Achse noch weiter nach rechts verschoben worden ist. Die optischen Markierungen 120 bis 127 können individuelle Identifizierungsinformationen codieren, die zum Beispiel die Leitungslänge und den Leitungsquerschnitt der jeweiligen Leitung spezifizieren.

Damit die mobile Einrichtung 90 bzw. die Steuereinheit 93 eine Bildpositionierung ausführen kann, sind mindestens zwei Referenzmarkierungen in einem Mindestabstand an dem Steuerungssystem 10 anzubringen. Ein Beispiel für die Anordnung von zwei Referenzmarkierungen 140 und 141, die in einem vorbestimmten Abstand zueinander auf der Oberseite des Steuerungsmoduls 30 angeordnet, ist in Figur 2 zu sehen.

Mit Hilfe des in der mobilen Einrichtung 90 hinterlegten Bildverarbeitungs- und/oder Bildanalysealgorithmus ist die die Steuereinheit 93 in der Lage, anhand der beiden Markierungen 140 und 141 ein aufgenommenes digitales Bild des in Figur 2 dargestellten Steuerungssystems 30 beispielsweise derart zu positionieren, dass die optischen Markierungen in entsprechende Felder einer virtuellen Matrix projiziert werden können.

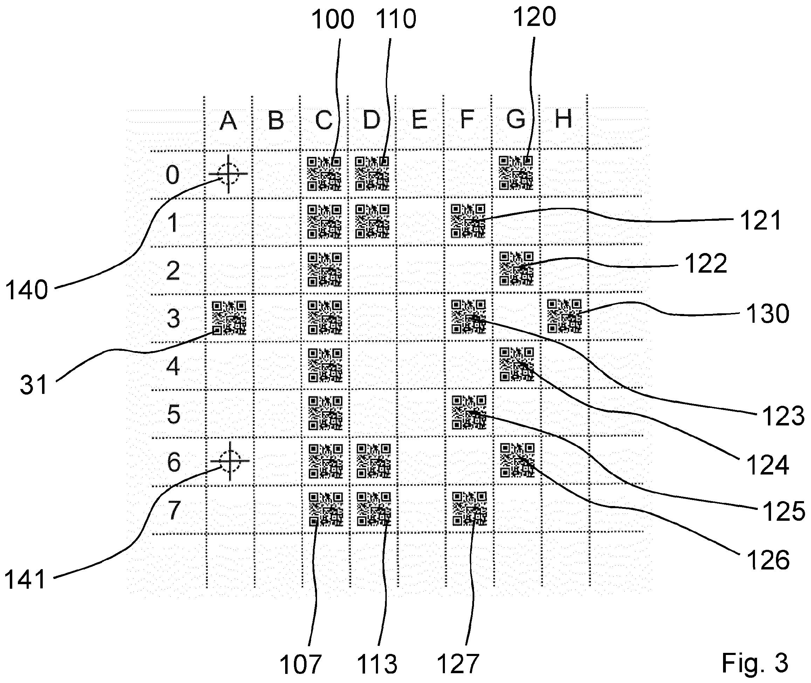

Die in Figur 2 beispielhaft gezeigte Anordnung der optischen Markierungen ermöglicht, dass die optischen Markierungen von der Steuereinheit 93 in entsprechende Felder einer virtuellen Matrix projiziert werden können, wie dies in Figur 3 beispielhaft gezeigt ist.

Figur 3 zeigt das Ergebnis der Auswertung eines digitalen Bildes des in Figur 2 gezeigten real aufgebauten Steuerungssystems 10, welches mit der digitalen Kamera 91 der mobilen Einrichtung 90 aufgenommen worden ist. Mit Hilfe des beispielsweise in der Speichereinrichtung 92 hinterlegten Bildverarbeitungs- und/oder Bildanalysealgorithmus ist die Steuereinheit 93 dazu in der Lage, die optischen Markierungen aus dem aufgenommen digitalen Bild zu extrahieren und in die Felder einer virtuellen 8 × 8-Matrix einzutragen bzw. zu projizieren. Die beispielhafte Matrix weist acht Zeilen, die mit 0-7 nummeriert sind, und acht Spalten die mit den Buchstaben A bis H bezeichnet sind, auf. Die in Figur 3 gezeigte Darstellung kann auf dem Display 94 der mobilen Einrichtung 90 angezeigt werden.

Fig. 3 zeigt das beispielhafte Ergebnis einer Bildauswertung, gemäß der die Steuereinheit 93 die beiden Referenzmarkierungen 140 und 141 in die Felder A0 und A6, die optische Markierung 31 in das Feld A3, die optischen Markierungen 100 bis 107 in die Felder C0 bis C7, die optischen Markierungen 110 und 111 in die Felder D0 und D1, die optischen Markierungen 112 und 113 in die Felder D6 und D7, die optischen Markierungen 121, 123, 125 und 127 in die Felder F1, F3, F5 bzw. F7, die optischen Markierungen 120, 122, 124 und 126 in die Felder G0, G2, G4 bzw. G6 und die optische Markierung 130 in das Feld H3, projiziert.

Mit Hilfe der Referenzmarkierungen 140 und 141 kann die Steuereinheit 93 das aufgenommene Bild und damit die optischen Markierungen so ausrichten, dass sie auf die virtuelle Matrix projiziert werden können.

Mit anderen Worten: Der QR-Code, d.h**.** die optische Markierung 31 in Feld A3 referenziert die Eindeutigkeit des Steuerungsmoduls 30 auf genau diesen Punkt. Dadurch sind die Positionen der Felder C0 bis C7 ebenfalls definiert und die Position der E/A-Module 20 bis 27 festgelegt. In den Feldern D0 bis D7 werden die speziellen Ausgestaltungen der E/A-Module identifiziert. Mit anderen Worten werden die E/A-Module 20 und 21 zum Beispiel als Halbleiterrelais identifiziert, während die E/A-Module 26 und 27 in den Feldern D6 und D7 als elektromagnetische Relais identifiziert werden.

Da gemäß der beispielhaften Programmierung die den internen Kanälen CH2 bis CH5 zugeordnete Anschlüsse des Steuerungsmoduls 30 nicht bestückt werden sollen, können an diese Anschlüsse PLC-Leerklemmen oder E/A-Module angeschlossen sein, die jedoch kein entsprechendes Bauteil (REL, SSR...) enthalten. Demzufolge enthalten die E/A-Modulen 22 bis 25 keine entsprechenden, funktionendefinierenden optischen Markierungen. Die Felder D2 bis D5 in der Matrix sind deshalb leer.

Es ist denkbar, dass beispielsweise auf dem Steuerungsmodul 30 eine dritte Markierung zur Positionsbestimmung angeordnet sein kann, mit der zusätzlich eine Winkelbestimmung eines aufgenommenen Bildes möglich ist. Alternativ können auch die QR-Codes selbst verwendet werden, da jeder QR-Code mindestens zwei räumlich getrennte Referenzmarkierungen enthält.

Um nunmehr prüfen zu können, ob die Bestückung des in Figur 2 gezeigten, real aufgebauten Steuerungssystems 10 ordnungsgemäß erfolgt ist, wird basierend auf der Programmierung der den internen Kanälen CH0 bis CR7 zugeordneten Anschlüsse des Steuerungsmoduls 30 eine digitale Repräsentation einer gewünschten Hardwarekonfiguration des Steuerungssystems 10 zum Beispiel auf einem PC erstellt und beispielsweise über eine Bluetooth-Verbindung oder eine drahtgebundene Verbindung in die mobile Einrichtung 90 geladen. Die digitale Repräsentation wird dann als Referenz- bzw. Soll-Hardwarekonfiguration des Steuerungssystems 10 verwendet.

Gemäß einer vorteilhaften Implementierung wird die digitale Repräsentation der gewünschten Hardwarekonfiguration des Steuerungssystems 10 durch eine Matrixdarstellung realisiert, die der in Figur 3 gezeigten Matrixdarstellung entspricht. Mit anderen Worten enthält die digitale Repräsentation eine 8 × 8-Matrix, bei der entsprechend der Programmierung in vorbestimmten Feldern beispielsweise jeweils eine Identifizierungsinformation zur eindeutigen Identifizierung des Steuerungsmoduls 30, der E/A-Module 20 bis 27, gegebenenfalls zur eindeutigen Identifikation deren Funktionen, zur eindeutigen Identifikation der Leitungen und eine eindeutige Identifikation des verwendeten Kabels enthalten sind. Die digitale Repräsentation, welche durch eine 8 × 8-Matrix beispielhaft dargestellt ist, kann vorzugsweise in Form einer Lookup-Tabelle in der Speichereinrichtung 92 der mobilen Einrichtung 90 hinterlegt werden, in dem den Matrixfeldern beispielsweise jeweils eine Speicheradresse zugeordnet wird, die der jeweiligen Zeilen- und Spaltenbezeichnung entspricht. Dadurch wird erreicht, dass die Felder der Matrix, die der digitalen Repräsentation zugeordnet sind, mit den Feldern der in Figur 3 gezeigten Matrix korrespondieren.

Zur Überprüfung der Hardwarekonfiguration des real aufgebauten Steuerungssystems 10 mithilfe der mobilen Einrichtung 90 wird nunmehr die in der mobilen Einrichtung 90 gespeicherte digitale Repräsentation der gewünschten Hardwarekonfiguration des Steuerungssystems 10 mit dem aufgenommenen digitalen Bild des in Figur 2 gezeigten real aufgebauten Steuerungssystems 10 unter Berücksichtigung bzw. Auswertung der optischen Markierungen, im vorliegenden Beispiel sind das die Markierungen 31, 100 bis 107, 110 bis 113, 120 bis 127 und 130 verglichen.

Gemäß einer beispielhaften Implementierung liest die Steuereinheit 93 nunmehr die QR-Codes, die in den entsprechenden Feldern der in Fig. 3 gezeigten virtuellen Matrix enthalten sind, aus, interpretiert sie, und vergleicht sie beispielsweise mit den Einträgen der in der mobilen Einrichtung 90 abgespeicherten Lookup-Tabelle, die die digitale Repräsentation der gewünschten Hardwarekonfiguration des Steuerungssystems 10 widerspiegelt. Mit anderen Worten: Die Inhalte der Matrixfelder der in Figur 3 gezeigten Matrix werden mit den Inhalten der Matrixfelder, die die digitale Repräsentation darstellen, verglichen. Stimmen alle Informationen überein, bedeutet dies, dass das in Figur 2 dargestellte real aufgebaute Steuerungssystem 10 mit der gewünschten Hardwarekonfiguration des Steuerungssystems übereinstimmt und eine fehlerfreie Bestückung vorliegt.

Sollte hingegen eine fehlerhafte Bestückung erfolgt sein, indem beispielsweise an dem Anschluss, der dem internen Kanal CH7 des Steuerungsmoduls 30 zugeordnet ist, nicht das entsprechend der zuvor programmierten Konfiguration vorgeschriebene E/A-Modul 20 angeschlossen worden sein, so liefert das Vergleichsergebnis, dass eine inhaltliche Übereinstimmung in dem Feld C0 nicht vorliegt. Mit anderen Worten: Mit Hilfe des erfindungsgemäßen Überprüfungsverfahrens kann nicht nur festgestellt werden, ob eine korrekte oder fehlerhafte Bestückung vorliegt, sondern auch der Ort einer Fehlbestückung erkannt werden. Das Vergleichsergebnis kann akustisch und/oder optisch, zum Beispiel am Display der mobilen Einrichtung 90 ausgegeben und/oder von der mobilen Einrichtung 90 an einen Kontrollrechner zur weiteren Veranlassung übermittelt werden.

Wurde als Vergleichsergebnis eine fehlerhafte Bestückung signalisiert, so kann die mobile Einrichtung 90 unter Ansprechen hierauf ein Steuersignal zum Steuerungsmodul 30 zum Beispiel über eine Bluetooth-Verbindung übertragen. Hierzu ist erforderlich, dass sowohl die mobile Einrichtung 90 als auch das Steuerungsmodul 30 jeweils über eine entsprechende Bluetooths-Schnittstelle verfügen. Unter Ansprechen auf das empfangene Steuersignal veranlasst dann das Steuerungsmodul 30 bzw. ein Mikrocontroller des Steuerungsmoduls 30, dass insbesondere die Hardwarekomponenten und das dazugehörende Steuerungsprogramm nicht scharf geschaltet werden. Auf diese Weise kann verhindert werden, dass bei einer Fehlbestückung das Steuerungssystem 10 beschädigt wird oder Fehlfunktionen ausführt.

Eine Scharfschaltung des Steuerungsmoduls 30 erfolgt vorzugsweise nur dann, wenn die mobile Einrichtung 90 eine fehlerfreie Bestückung signalisiert.

Das zuvor beschriebene Überprüfungs- und Signalisierungsverfahren kann in Form eines Computerprogramms, beispielsweise einer App in der Speichereinrichtung 92 der mobilen Einrichtung 90 hinterlegt werden. Insofern genügt es, die App über die mobile Einrichtung 90 aufzurufen, die daraufhin den Benutzer automatisch durch die Anwendung führt, indem sie ihn zunächst auffordert, dass real aufgebaute Steuerungssystem 10 aufzunehmen. Anschließend wird die App unter Steuerung des Mikrocontrollers 93 der mobilen Einrichtung 90 automatisch ausgeführt.

Vorteilhafte Ausführungsbeispiele und Merkmale der Erfindung werden nachfolgend noch einmal allgemein zusammengefasst.

Vorzugsweise wird ein Verfahren zum Überprüfen der Hardwarekonfiguration eines real aufgebauten Steuerungssystems 10 mit Hilfe einer mobilen Einrichtung 90 zur Verfügung gestellt. Die mobile Einrichtung 90, die eine tragbare Kommunikationseinrichtung sein kann, enthält insbesondere eine Kamera 91 und eine Speichereinrichtung 92, in welcher eine digitale Repräsentation einer gewünschten Hardwarekonfiguration des real aufgebauten Steuerungssystems 10 gespeichert ist, wobei das real aufgebaute Steuerungssystem 10 ein Steuerungsmodul 30 mit mehreren Anschlusseinrichtungen 40-47 aufweist, wobei an jeder Anschlusseinrichtung ein E/A-Modul derart angeschlossen ist, dass das Steuerungsmodul 30 mit den E/A-Modulen 20-27 mechanisch lösbar gekoppelt ist, wobei an dem Steuerungsmodul 30 eine optische Markierung 31 zur eindeutigen Identifizierung des Steuerungsmoduls 30 und an jedem der E/A-Module 20-27 wenigstens eine optische Markierung 100-107 zur eindeutigen Identifizierung des jeweiligen E/A-Moduls angebracht sind. Das Verfahren weist insbesondere folgende Schritte auf:
a) Aufnehmen, mit der Kamera 91 der mobilen Einrichtung 90, eines digitalen Bildes des real aufgebauten Steuerungssystems 10;
b) Überprüfen der Hardwarekonfiguration des real aufgebauten Steuerungssystems 10 in der mobilen Einrichtung 90, indem die in der mobilen Einrichtung 90 gespeicherte digitale Repräsentation mit dem in Schritt a) aufgenommenen digitalen Bild unter Berücksichtigung bzw. Auswertung der optischen Markierungen 31 und 100 bis 107 verglichen wird. Hierzu kann eine Steuereinheit 93 der mobilen Einrichtung 90 einen in der mobilen Einrichtung 90 gespeicherten Bildverarbeitungs- und/oder Bildanalysealgorithmus ausführen.

Die optischen Markierungen 31 und 100 bis 107 sind vorzugsweise an vorbestimmten Stellen des Steuerungsmoduls 30 und der E/A-Module 20-27 angebracht, wobei Schritt a) folgende weitere Schritte umfassen kann: Extrahieren der im aufgenommenen digitalen Bild enthaltenen optischen Markierungen 31 und 100 bis 107 und Anordnen der extrahierten optischen Markierungen jeweils in einem Felder einer ersten 2-dimensionalen Matrix, wobei die in der mobilen Einrichtung 90 gespeicherte Repräsentation der gewünschten Hardwarekonfiguration des real aufgebauten Steuerungssystems 10 eine zweite 2-dimensionale Matrix enthält, wobei in vorbestimmten Feldern der zweiten Matrix jeweils eine eindeutige Kennung zur Identifizierung des Steuerungsmoduls 30 und der E/A-Module 20-27 enthalten ist, und wobei
in Schritt b) die Inhalte der korrespondierenden Felder der ersten und zweiten Matrix miteinander verglichen werden.

Die Schritte des Extrahierens der optischen Markierungen und deren Anordnung in einer ersten 2-dimensionalen Matrix werden vorzugsweise von Steuereinheit 93 unter Anwendung des Bildverarbeitungs- und/oder Bildanalysealgorithmus ausgeführt. Die zweite 2-dimnesionale Matrix, die die digitale Repräsentation widerspiegelt, kann als eine Lookup-Tabelle in der mobilen Einrichtung 90 hinterlegt werden.

Die mobile Einrichtung 90 kann unter Ansprechen auf den in Schritt b) durchgeführten Vergleich eine fehlerhafte Hardwarekonfiguration im real aufgebauten Steuerungssystem 10 erkennen und den Ort innerhalb der fehlerhaften Hardwarekonfiguration feststellen.

Zweckmäßigerweise können an dem Steuerungsmodul 30 und/oder an wenigstens einem der E/A-Modulen 20-27 des real aufgebauten Steuerungssystems wenigstens zwei im Abstand zueinander angeordnete Referenzmarkierungen 140, 141 angebracht sein, die in Schritt a) zur Bildpositionierung ausgewertet werden.

Vorzugsweise sind die optischen Markierungen 31, 100-107, 110-113 und 130 Barcodes und/oder QR-Codes, die jeweils eine individuelle Identifizierungsinformation codieren, die insbesondere von der Steuereinheit 93 interpretiert werden können.

Vorzugsweise können die QR-Codes und/oder Barcodes wenigstens zwei Referenzmarkierungen enthalten, die in Schritt a) zur Bildpositionierung ausgewertet werden.

Eine vorteilhafte Ausgestaltung sieht vor, dass in der mobilen Einrichtung 90 eine digitale Repräsentation einer gewünschten Hardwarekonfiguration des real aufgebauten Steuerungssystems 10 gespeichert wird, bei welchem an wenigstens einem der E/A-Module 20-27 eine Anschlussleitung 70-77 angeschlossen werden soll, und dass in Schritt a) ein digitales Bild des real aufgebauten Steuerungssystems (10) aufgenommen wird, bei welchem an wenigstens einem der E/A-Module 20-27 eine Anschlussleitung 70-77 angeschlossen ist, wobei an jeder Anschlussleitung 70-77 eine optische Markierung 120-127 zur eindeutigen Identifizierung der jeweiligen Anschlussleitung angebracht ist.

Das in Schritt b) gelieferte Vergleichsergebnis kann von der mobilen Einrichtung 90 zum Steuerungsmodul 30 übertragen werden. Wenn in Schritt b) festgestellt worden ist, dass die Hardwarekonfiguration des real aufgebauten Steuerungssystems 10 fehlerhaft ist, wird das Steuerungsmodul 30 nicht scharf geschaltet.

Weiterhin kann ein Computerprogramm vorgesehen sein, welches eine Vielzahl von Anweisungen enthält, welche in einer mobilen Einrichtung 90, die zumindest eine Kamera 91 und vorzugsweise zumindest eine Steuereinheit 93 und eine Speichereinrichtung 92 aufweist, speicherbar sind, wobei die Anweisungen, wenn sie von der Steuereinheit 93 der mobilen Einrichtung 90 abgearbeitet werden, die oben genannten Verfahrensschritte ausführen.

Dank der Erfindung kann die Hardwarekonfiguration des real aufgebauten Steuerungssystems 10 virtuell und elektronisch in der mobilen Einrichtung 90 geprüft und gegebenenfalls das Prüfergebnis von der mobilen Einrichtung 90 zum Steuerungsmodul 30 übertragen werden.

## Patentansprüche

1. Verfahren zum Überprüfen der Hardwarekonfiguration eines real aufgebauten Steuerungssystems (10) mit Hilfe einer mobilen Einrichtung (90), die eine Kamera (91) und eine Speichereinrichtung (92) enthält, in welcher eine digitale Repräsentation einer gewünschten Hardwarekonfiguration des real aufgebauten Steuerungssystems (10) gespeichert ist, wobei das real aufgebaute Steuerungssystem ein Steuerungsmodul (30) mit mehreren Anschlusseinrichtungen (40-47) aufweist, wobei an jeder Anschlusseinrichtung ein E/A-Modul derart angeschlossen ist, dass das Steuerungsmodul (30) mit den E/A-Modulen (20-27) mechanisch lösbar gekoppelt ist, wobei an dem Steuerungsmodul (30) eine optische Markierung (31) zur eindeutigen Identifizierung des Steuerungsmoduls (30) und an jedem der E/A-Module (20-27) wenigstens eine optische Markierung (100-107; 110-113) zur eindeutigen Identifizierung des jeweiligen E/A-Moduls angebracht sind, und wobei die optischen Markierungen (31, 100-107; 110, 113) an vorbestimmten Stellen des Steuerungsmoduls (30) und der E/A-Module (20-27) angebracht sind, mit folgenden Schritten:
a) Aufnehmen, mit der mobilen Einrichtung (90), eines digitalen Bildes des real aufgebauten Steuerungssystems (10) und
Extrahieren der im aufgenommenen digitalen Bild enthaltenen optischen Markierungen (31; 100-107; 110-113) und Anordnen der extrahierten optischen Markierungen jeweils in einem der Felder einer ersten 2-dimensionalen Matrix, wobei die
in der mobilen Einrichtung (90) gespeicherte Repräsentation der gewünschten Hardwarekonfiguration des real aufgebauten Steuerungssystems (10) eine zweite 2-dimensionale Matrix enthält, wobei in vorbestimmten Feldern der zweiten Matrix jeweils eine eindeutige Kennung zur Identifizierung des Steuerungsmoduls (30) und der E/A-Module (20-27) enthalten ist;
b) Überprüfen der Hardwarekonfiguration des real aufgebauten Steuerungssystems (10) in der mobilen Einrichtung (90), indem die in der mobilen Einrichtung (90) gespeicherte digitale Repräsentation mit dem in Schritt a) aufgenommenen digitalen Bild unter Auswertung der optischen Markierungen (31, 100-107; 110-113) verglichen wird, wobei die Inhalte der korrespondierenden Felder der ersten und zweiten Matrix miteinander verglichen werden,
und wobei die mobile Einrichtung (90) unter Ansprechen auf den in Schritt b) durchgeführten Vergleich eine fehlerhafte Hardwarekonfiguration im real aufgebauten Steuerungssystem (10) erkennen und den Ort innerhalb der fehlerhaften Hardwarekonfiguration feststellen kann.

2. Verfahren nach Anspruch 1,
**dadurch gekennzeichnet, dass**
an dem Steuerungsmodul (30) und/oder an wenigstens einem der E/A-Modulen (20-27) des real aufgebauten Steuerungssystems wenigstens zwei im Abstand zueinander angeordnete Referenzmarkierungen (140, 141) angebracht sind, die in Schritt a) zur Bildpositionierung ausgewertet werden.

3. Verfahren nach einem der vorstehenden Ansprüche,
**dadurch gekennzeichnet, dass**
die optischen Markierungen (31; 100-107; 110-113) Barcodes und/oder QR-Codes sind.

4. Verfahren nach Anspruch 3,
**dadurch gekennzeichnet, dass**
die QR-Codes und/oder Barcodes wenigstens zwei Referenzmarkierungen enthalten, die in Schritt a) zur Bildpositionierung ausgewertet werden.

5. Verfahren nach einem der vorstehenden Ansprüche,
**dadurch gekennzeichnet, dass**
in der mobilen Einrichtung (90) eine digitale Repräsentation einer gewünschten Hardwarekonfiguration des real aufgebauten Steuerungssystems (10) gespeichert wird, bei welchem an wenigstens einem der E/A-Module (20-27) eine Anschlussleitung (70-77) angeschlossen ist, und dass
in Schritt a) ein digitales Bild des real aufgebauten Steuerungssystems (10) aufgenommen wird, bei welchem an wenigstens einem der E/A-Module (20-27) eine Anschlussleitung (70-77) angeschlossen ist, wobei an jeder Anschlussleitung (70-77) eine optische Markierung (120-127) zur eindeutigen Identifizierung der jeweiligen Anschlussleitung angebracht ist.

6. Verfahren nach einem der vorstehenden Ansprüche,
**dadurch gekennzeichnet, dass**
als mobile Einrichtung (90) eine tragbare Kommunikationseinrichtung verwendet wird.

7. Verfahren nach einem der vorstehenden Ansprüche,
**dadurch gekennzeichnet, dass**
das Steuerungsmodul (30) nicht scharf geschaltet wird, wenn in Schritt b) festgestellt worden ist, dass die Hardwarekonfiguration des real aufgebauten Steuerungssystems (10) fehlerhaft ist.

8. Computerprogramm enthaltend eine Vielzahl von Anweisungen, welche in einer, eine Kamera (91) aufweisenden mobilen Einrichtung (90) speicherbar sind, wobei die Anweisungen, wenn sie von einer Steuereinheit der mobilen Einrichtung (90) abgearbeitet werden, das Verfahren nach einem der Ansprüche 1 bis 7 ausführen.

## Claims

1. A method for checking the hardware configuration of an actually built control system (10) using a mobile device (90) that comprises a camera (91) and a storage device (92) in which a digital representation of a desired hardware configuration of the actually built control system (10) is stored, wherein the actually built control system comprises a control module (30) with a plurality of connection devices (40-47), wherein an I/O module is connected to each connection device in such a way that the control module (30) is coupled to the I/O modules (20-27) in a mechanically detachable manner, wherein there is provided on the control module (30) an optical mark (31) for unambiguous identification of the control module (30) and on each of the I/O modules (20-27) at least one optical mark (100-107; 110-113) for unambiguous identification of the respective I/O module, and wherein the optical marks (31, 100-107; 110, 113) are arranged at predetermined locations on the control module (30) and the I/O modules (20-27), comprising the following steps:
a) capturing, with the mobile device (90), a digital image of the actually built control system (10) and
extracting the optical marks (31; 100-107; 110-113) comprised in the captured digital image and respectively arranging the extracted optical marks in one of the fields of a first two-dimensional matrix, wherein the representation of the desired hardware configuration of the actually built control system (10), stored in the mobile device (90), comprises a second two-dimensional matrix, wherein predetermined fields of the second matrix each comprise a unique identifier for identifying the control module (30) and the I/O modules (20-27);
b) checking the hardware configuration of the actually built control system (10) in the mobile device (90) by comparing the digital representation stored in the mobile device (90) with the digital image captured in step a) by evaluating the optical marks (31, 100-107; 110-113), wherein the contents of the corresponding fields of the first and second matrices are compared with each other,
and wherein the mobile device (90), in response to the comparison performed in step b), can detect a faulty hardware configuration in the actually built control system (10) and determine the location within the faulty hardware configuration.

2. The method according to claim 1,
**characterized in that**
at least two reference marks (140, 141) arranged at a distance from each other are provided on the control module (30) and/or on at least one of the I/O modules (20-27) of the actually built control system, which are evaluated in step a) for image positioning.

3. The method according to any one of the preceding claims, **characterized in that** the optical marks (31; 100-107; 110-113) are barcodes and/or QR codes.

4. The method according to claim 3,
**characterized in that**
the QR codes and/or barcodes comprise at least two reference marks which are evaluated in step a) for image positioning.

5. The method according to any one of the preceding claims, **characterized in that** a digital representation of a desired hardware configuration of the actually built control system (10) is stored in the mobile device (90), in which a connection line (70-77) is connected to at least one of the I/O modules (20-27), and **in that** in step a) a digital image of the actually built control system (10) is captured, in which a connection line (70-77) is connected to at least one of the I/O modules (20-27), wherein an optical mark (120-127) is provided on each connection line (70-77) for the unambiguous identification of the respective connection line.

6. The method according to any one of the preceding claims, **characterized in that** a portable communication device is used as the mobile device (90).

7. The method according to any one of the preceding claims, **characterized in that** the control module (30) is not activated if it is determined in step b) that the hardware configuration of the actually built control system (10) is faulty.

8. A computer program comprising a plurality of instructions which can be stored in a mobile device (90) having a camera (91), wherein the instructions, when processed by a control unit of the mobile device (90), execute the method according to any one of claims 1 to 7.

## Revendications

1. Procédé de vérification de la configuration matérielle d'un système de commande (10) réellement construit à l'aide d'un dispositif (90) mobile, lequel comprend une caméra (91) et un dispositif mémoire (92), dans lequel est mémorisée une représentation numérique d'une configuration matérielle souhaitée du système de commande (10) réellement construit, dans lequel le système de commande réellement construit comporte un module de commande (30) comportant plusieurs dispositifs d'accouplement (40-47), dans lequel un module E/S est accouplé à chaque dispositif d'accouplement de telle sorte que le module de commande (30) est accouplé de manière mécaniquement détachable aux modules E/S (20-27), dans lequel un marquage (31) optique est apposé sur le module de commande (30) permettant d'identifier de manière univoque le module de commande (30) et au moins un marquage (100-107 ; 110-113) optique est apposé pour identifier de manière univoque le module E/S (20-27) respectif, et dans lequel les marquages (31, 100-107 ; 110, 113) optiques sont apposés à des emplacements prédéterminés du module de commande (30) et des modules E/S (20-27), comprenant les étapes suivantes :
a) l'enregistrement, à l'aide du dispositif (90) mobile, d'une image numérique du système de commande (10) réellement construit, et
l'extrait des marquages (31 ; 100-107 ; 110-113) optiques compris dans l'image numérique enregistrée et le dépôt des marquages optiques extraits respectivement dans l'un des champs d'une première matrice bidimensionnelle, dans lequel la représentation mémorisée dans le dispositif (90) mobile de la configuration matérielle souhaitée du système de commande (10) réellement construit comprend une seconde matrice bidimensionnelle, dans lequel, des champs prédéterminés de la seconde matrice comprennent respectivement un identifiant unique pour identifier le module de commande (30) et les modules E/S (20-27) ;
b) la vérification de la configuration matérielle du système de commande (10) réellement construit dans le dispositif (90) mobile en comparant la représentation numérique mémorisée dans le dispositif (90) mobile avec l'image numérique enregistrée à l'étape a) par évaluation des marquages (31, 100-107 ; 110-113) optiques, dans lequel les contenus des champs correspondants de la première et de la seconde matrice sont comparés les uns avec les autres,
et dans lequel le dispositif (90) mobile, en réponse à la comparaison effectuée à l'étape b), peut détecter une configuration matérielle défectueuse dans le système de commande (10) réellement construit et déterminer l'emplacement à l'intérieur de la configuration matérielle défectueuse.

2. Procédé selon la revendication 1,
**caractérisé en ce que**
sur le module de commande (30) et/ou sur au moins l'un des modules E/S (20-27) du système de commande réellement construit, au moins deux marquages de référence (140, 141) disposés à distance l'un de l'autre sont apposés, lesquels sont évalués à l'étape a) pour positionner l'image.

3. Procédé selon l'une quelconque des revendications précédentes,
**caractérisé en ce que**
les marquages (31 ; 100-107 ; 110-113) optiques sont des codes à barres et/ou des codes QR.

4. Procédé selon la revendication 3,
**caractérisé en ce que**
les codes QR et/ou les codes à barres comprennent au moins deux marquages de référence, lesquels sont évalués à l'étape a) pour positionner l'image.

5. Procédé selon l'une quelconque des revendications précédentes,
**caractérisé en ce que**
dans le dispositif (90) mobile est mémorisée la représentation numérique de la configuration matérielle souhaitée du système de commande (10) réellement construit, une ligne de raccordement (70-77) étant couplée à au moins un des modules E/S (20-27), et **en ce que**
à l'étape a), une image numérique du système de commande (10) réellement construit est enregistrée, la ligne de raccordement (70-77) étant couplée à au moins un des modules E/S (20-27), dans lequel le marquage (120-127) optique est apposé sur chaque ligne de raccordement (70-77) pour identifier de manière univoque la ligne de raccordement respective.

6. Procédé selon l'une quelconque des revendications précédentes,
**caractérisé en ce que**
un dispositif de communication portable est utilisé comme dispositif (90) mobile.

7. Procédé selon l'une quelconque des revendications précédentes,
**caractérisé en ce que**
le module de commande (30) n'est pas activé lorsqu'il a été déterminé à l'étape b) que la configuration matérielle du système de commande (10) réellement construit est défectueuse.

8. Programme informatique comprenant
une pluralité d'instructions, lesquelles peuvent être mémorisées dans un dispositif (90) mobile comprenant une caméra (91), dans lequel lesdites instructions, lorsqu'elles sont traitées par une unité de commande du dispositif (90) mobile, mettent en œuvre le procédé selon l'une quelconque des revendications 1 à 7.
